# EUROPEAN PATENT APPLICATION

(11) **EP 3 579 652 A1**
(43) Date of publication of application: **11.12.2019**
(21) Application number: 18747260.0
(22) Date of filing: 01.02.2018
(51) Int. Cl.: H04W 74/02, H04W 16/14, H04W 72/04, H04W 72/08

(54) **BASE STATION DEVICE, TERMINAL DEVICE, AND COMMUNICATION METHOD**

(30) Priority: 01.02.2017 JP 2017016698
(71) Applicant: Sharp Kabushiki Kaisha, Sakai City, Osaka 590-8522 (JP); FG INNOVATION COMPANY LIMITED, Hong Kong (CN)
(72) Inventor: TOMEBA, Hiromichi, Osaka 590-8522 (JP); YAMADA, Ryota, Osaka 590-8522 (JP)
(74) Representative: Müller Hoffmann & Partner
(86) International application number: PCT/JP2018/003399
(87) International publication number: WO 2018/143339

(57) **Abstract**

The present invention is based on a base station apparatus which performs carrier sense to reserve a radio medium for a prescribed time period, configures an uplink communication period in at least a part of the prescribed time period, and selectively or simultaneously configures a first communication mode and a second communication mode in at least one uplink subframe period in the uplink communication period, transmits a downlink subframe including common control information for indicating a communication mode configured for the uplink subframe period wherein the first communication mode allows the terminal apparatus to communicate based on scheduling information of the base station apparatus, and the second communication mode allows the terminal apparatus to communicate without the scheduling information of the base station apparatus.

## Description

### Technical Field

The present invention relates to a base station apparatus, a terminal apparatus, and a communication method.

This application claims priority based on JP 2017-016698 filed on February 1, 2017, the contents of which are incorporated herein by reference.

### Background Art

In a communication system such as Long Term Evolution (LTE) or LTE-Advanced (LTE-A) standardized by the Third Generation Partnership Project (3GPP), the communication area can be widened by forming a cellular configuration in which multiple areas, covered by base station apparatuses (base stations, transmission stations, transmission points, downlink transmission devices, uplink reception devices, a group of transmit antennas, a group of transmit antenna ports, component carriers, eNodeB, access points, and AP) or transmission stations equivalent to the base station apparatuses, are deployed in the form of multiple cells (Cells). A terminal apparatus (reception station, reception point, downlink reception apparatus, uplink transmission apparatus, receive antenna group, receive antenna port group, UE, station, and STA) is connected to the base station. In such a cellular configuration, frequency efficiency can be improved by using the same frequency among neighboring cells or sectors.

Research and development activities related to the 5th generation mobile radio communication system (5G system) have been actively carried out, aiming to launch commercial services around the year 2020. In recent years, the International Telecommunication Union Radio communications Sector (ITU-R) that is an international standardization institution has reported a vision recommendation on a standard scheme for the 5G system (International mobile telecommunication - 2020 and beyond: IMT-2020) (see NPL 1).

An important problem is to secure a frequency resource for the communication system to cope with a rapid increase in data traffic. The frequency band (frequency range) assumed by the communication system providing a cellular service represented by LTE until now has been a frequency band called a so-called licensed band which is licensed to a wireless operator by a country or region to which the wireless operator provides a service, and therefore, available frequency bands are limited.

Then, in recent years, discussed has been a cellular service using a frequency band called a so-called unlicensed band which does not require to be licensed by a country or region. For example, in the LTE system, such a cellular service has been specified as a License assisted access (LAA) (see NPL 2). Also in the 5G system where the data traffic is expected to rapidly increase more and more, an increasing importance of actively utilizing the unlicensed band is assumed. In Enhanced LAA (eLAA), the terminal apparatus can transmit uplink signals in the unlicensed band, but the terminal apparatus only can transmit signals after the terminal apparatus requests the base station apparatus to allocate a radio resource and is allocated with the radio resource from the base station apparatus.

However, the terminal apparatus needs to wait for radio resource allocation from the base station apparatus, which is a large shortcoming for the terminal apparatus that wants to perform the communication for which instantaneity is required. Therefore, it has been studied to perform autonomous transmission (Autonomous transmission) using the LAA, the autonomous transmission permitting that the terminal apparatus autonomously ensures a radio medium and starts uplink communication (see NPL 3), and a delay time of the uplink communication using the LAA is expected to reduce.

### Citation List

### Non Patent Literature

NPL 1: "IMT Vision - Framework and overall objectives of the future development of IMT for 2020 and beyond," Recommendation ITU-R M.2083-0, Sept. 2015.
NPL 2: RP-140259, "Study on Licensed-Assisted Access using LTE," 3GPP TSG RAN Meeting #63, March, 2014.
NPL 3: RP-162228, "New Work Item on Enhancements to LTE operation in unlicensed spectrum," 3GPP TSG RAN Meeting #74, December 2016.

### Summary of Invention

### Technical Problem

However, in a case that a first terminal apparatus attempts to autonomously access a radio medium, a timing at which the first terminal apparatus transmits a signal does not necessarily match a subframe boundary, and the base station apparatus may not be able to understand the signal transmitted by the first terminal apparatus. In a case that a second terminal apparatus to which the base station apparatus allocates a radio resource is present mixedly in the same cell, communication of the second terminal apparatus is prohibited by the first terminal apparatus attempting to autonomously access the radio medium, which, in turn, may cause a reduction in the frequency efficiency of the entire system.

One aspect of the present invention has been made in view of such circumstances, and an object of the present invention is to provide a base station apparatus, a terminal apparatus, and a communication method capable of achieving a high frequency efficiency while accommodating a terminal apparatus attempting to autonomously access a radio medium.

### Solution to Problem

To address the above-mentioned drawbacks, a base station apparatus, a terminal apparatus, and a communication method according to an aspect of the present invention are configured as follows.
(1) A base station apparatus according to an aspect of the present invention is a base station apparatus for communicating with a terminal apparatus, the base station apparatus including: a carrier sense unit configured to perform carrier sense to reserve a radio medium for a prescribed time period; a controller configured to configure an uplink communication period in a part of the prescribed time period, and selectively or simultaneously configure a first communication mode and a second communication mode in at least one uplink subframe period in the uplink communication period; and a transmitter configured to transmit a downlink subframe including control information for indicating a communication mode configured for the at least one uplink subframe period, wherein the first communication mode allows the terminal apparatus to communicate based on scheduling information of the base station apparatus, and the second communication mode allows the terminal apparatus without the scheduling information of the base station apparatus.
(2) The base station apparatus according to an aspect of the present invention is the base station apparatus according to (1) above, wherein in the at least one uplink subframe period for which the second communication mode is configured, information for indicating a candidate of an interlace number configurable by the terminal apparatus is signaled to the terminal apparatus.
(3) The base station apparatus according to an aspect of the present invention is the base station apparatus according to (2) above, wherein the controller configures an occupancy period of signal in the at least one uplink subframe period, and in a case that the controller simultaneously configures the first communication mode and the second communication mode in the at least one uplink subframe period, the occupancy period is common to the first communication mode and the second communication mode.
(4) The base station apparatus according to an aspect of the present invention is the base station apparatus according to (2) above, wherein in the at least one uplink subframe period for which the second communication mode is configured, information for indicating a maximum value of the number of uplink subframes which the terminal apparatus can continuously transmit is signaled to the terminal apparatus.
(5) The base station apparatus according to an aspect of the present invention is the base station apparatus according to (2) above, wherein the controller is capable of configuring multiple component carriers in the at least one uplink subframe period, and selectively or simultaneously configure the first communication mode and the second communication mode for each of the multiple component carriers.
(6) The base station apparatus according to an aspect of the present invention is the base station apparatus according to (5) above, wherein in the at least one uplink subframe period for which the second communication mode is configured, information for indicating the maximum number of the multiple component carriers which the terminal apparatus is capable of simultaneously configuring is signaled to the terminal apparatus.
(7) The base station apparatus according to an aspect of the present invention is the base station apparatus according to (2) above, wherein in a case that an uplink subframe is received from the terminal apparatus in the at least one uplink subframe period for which the second communication mode is configured, the transmitter transmits, to the terminal apparatus, a positive acknowledgement or a negative acknowledgement related to the uplink subframe in a specified downlink subframe after a prescribed time period elapses from a timing when the uplink subframe is received.
(8) The base station apparatus according to an aspect of the present invention is the base station apparatus according to (7) above, wherein information for indicating the prescribed time period is signaled to the terminal apparatus.
(9) The base station apparatus according to an aspect of the present invention is the base station apparatus according to (2) above, wherein the transmitter transmits, to the terminal apparatus, a reception acknowledgement for indicating that a signal has been received in the at least one uplink subframe period for which the second communication mode is configured.
(10) A terminal apparatus according to an aspect of the present invention is a terminal apparatus for communicating with a base station apparatus, the terminal apparatus including: a carrier sense unit configured to perform carrier sense to reserve a radio medium for a prescribed time period; a transmitter configured to transmit an uplink subframe in a case that an uplink subframe period, for which a first communication mode and a second communication mode is selectively or simultaneously configured by the base station apparatus, is reserved by using the carrier sense; and a receiver configured to receive a downlink subframe including control information for indicating a communication mode configured for the uplink subframe period, wherein, the first communication mode allows communication based on scheduling information notified from the base station apparatus, and the second communication mode allows communication without the scheduling information notified from the base station apparatus.
(11) The terminal apparatus according to an aspect of the present invention is the terminal apparatus according to (10) above, wherein in a case that the transmitter transmits the uplink subframe in the uplink subframe period for which the second communication mode is configured, the transmitter uses an interlace candidate which the base station apparatus configures in the second communication mode.
(12) The terminal apparatus according to an aspect of the present invention is the terminal apparatus according to (11) above, wherein the transmitter continuously transmits a plurality of the uplink subframes, and a period for the carrier sense performed by the carrier sense unit is configured based on the number of the plurality of the uplink subframes.
(13) The terminal apparatus according to an aspect of the present invention is the terminal apparatus according to (11) above, wherein in a case that the transmitter transmits a scheduling request to the base station apparatus, the transmitter does not transmit the uplink subframe, based on the second communication mode, in the uplink subframe period for which the first communication mode and the second communication mode are simultaneously configured.
(14) The terminal apparatus according to an aspect of the present invention is the terminal apparatus according to (11) above, wherein in the uplink subframe period for which the second communication mode is configured, in a case that neither positive acknowledgement nor negative acknowledgement related to the uplink subframe is transmitted from the base station apparatus for a prescribed time period after the uplink subframe is transmitted, the uplink subframe is retransmitted.
(15) A communication method according to an aspect of the present invention is a communication method for a base station apparatus for communicating with a terminal apparatus, the communication method including the steps of: performing carrier sense to reserve a radio medium for a prescribed time period; configuring an uplink communication period in a part of the prescribed time period, and selectively or simultaneously configuring a first communication mode and a second communication mode in at least one uplink subframe period in the uplink communication period; and transmitting a downlink subframe including common control information for indicating a communication mode configured for the uplink subframe period, wherein the first communication mode allows the terminal apparatus to communicate based on scheduling information of the base station apparatus, and the second communication mode allows the terminal apparatus to communicate without the scheduling information of the base station apparatus.
(16) A communication method according to an aspect of the present invention is a communication method for a terminal apparatus for communicating with a base station apparatus, the communication method including the steps of: performing carrier sense to reserve a radio medium for a prescribed time period; transmitting an uplink subframe in a case that an uplink subframe period, for which a first communication mode and a second communication mode is selectively or simultaneously configured by the base station apparatus, is reserved by using the carrier sense; and receiving a downlink subframe including common control information for indicating a communication mode configured for the uplink subframe period, wherein the first communication mode allows communication based on scheduling information notified from the base station apparatus, and the second communication mode allows communication without the scheduling information notified from the base station apparatus.

### Advantageous Effects of Invention

According to one aspect of the present invention, it is possible to achieve a high frequency efficiency while accommodating a terminal apparatus attempting to autonomously access a radio medium.

### Brief Description of Drawings

FIG. 1 is a diagram illustrating an example of a communication system according to the present embodiment.
FIG. 2 is a diagram illustrating an example of a frame structure according to the present embodiment.
FIG. 3 is a block diagram illustrating a configuration example of a base station apparatus according to the present embodiment.
FIG. 4 is a block diagram illustrating a configuration example of a terminal apparatus according to the present embodiment.

### Description of Embodiments

A communication system according to the present embodiment includes a base station apparatus (a transmission unit, cells, a transmission point, a group of transmit antennas, a group of transmit antenna ports, component carriers, eNodeB) and terminal apparatuses (a terminal, a mobile terminal, a reception point, a reception terminal, a reception unit, a group of receive antennas, a group of receive antenna ports, UE). A base station apparatus connecting (establishing a radio link) with the terminal apparatus is referred to as a serving cell.

The base station apparatus and terminal apparatus in the present embodiment can communicate in a frequency band requiring to be licensed (licensed band) and/or not requiring to be licensed (unlicensed band).

According to the present embodiment, "X/Y" includes the meaning of "X or Y". According to the present embodiment, "X/Y" includes the meaning of "X and Y". According to the present embodiment, "X/Y" includes the meaning of "X and/or Y".

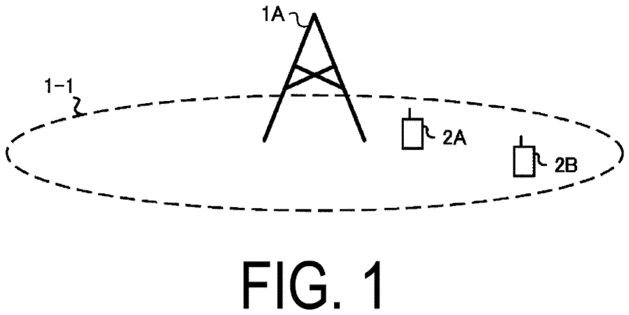

FIG. 1 is a diagram illustrating an example of a communication system according to the present embodiment. As illustrated in FIG. 1, the communication system according to the present embodiment includes a base station apparatus 1A and terminal apparatuses 2A and 2B. A coverage 1-1 is a range (a communication area) in which the base station apparatus 1A can connect to the terminal apparatuses. The terminal apparatuses 2A and 2B are also collectively referred to as terminal apparatuses 2.

In FIG. 1, the following uplink physical channels are used for uplink radio communication from the terminal apparatus 2A to the base station apparatus 1A. The uplink physical channels are used for transmitting information output from a higher layer.
- Physical Uplink Control Channel (PUCCH)
- Physical Uplink Shared Channel (PUSCH)
- Physical Random Access Channel (PRACH)

The PUCCH is used to transmit Uplink Control Information (UCI). Here, the uplink control information includes a positive acknowledgement (ACK) or a negative acknowledgement (NACK) (ACK/NACK) for downlink data (downlink transport block, Downlink-Shared Channel: DL-SCH). The ACK/NACK for the downlink data is also referred to as a HARQ-ACK or a HARQ feedback.

The uplink control information includes Channel State Information (CSI) for the downlink. The uplink control information includes a Scheduling Request (SR) used to request an Uplink-Shared Channel (UL-SCH) resource. The channel state information refers to a Rank Indicator (RI) for specifying a suited spatial multiplexing number, a Precoding Matrix Indicator (PMI) for specifying a suited precoder, a Channel Quality Indicator (CQI) for specifying a suited transmission rate, a CSI-Reference Signal (RS) Resource Indication (CRI) for specifying a suited CSI-RS resource, and the like.

The channel quality indicator CQI (hereinafter, referred to as a CQI value) can be a suited modulation scheme (e.g., QPSK, 16QAM, 64QAM, 256QAM, or the like) and a suited coding rate in a prescribed band (details of which will be described later). The CQI value can be an index (CQI Index) determined by the above change scheme, the coding rate, and the like. The CQI value can take a value predetermined in the system.

Note that the rank indicator and the precoding quality indicator can take values predetermined in the system. The rank indicator and the precoding matrix indicator can be an index determined by the number of spatial multiplexing and precoding matrix information. Note that values of the rank indicator, the precoding matrix indicator, and the channel quality indicator CQI are collectively referred to as CSI values.

The PUSCH is used to transmit the uplink data (uplink transport block, UL-SCH). The PUSCH may be used to transmit an ACK/NACK and/or channel state information along with the uplink data. The PUSCH may be used to transmit the uplink control information only.

The PUSCH is used to transmit an RRC message. The RRC message is information/signal that is processed in a Radio Resource Control (RRC) layer. The PUSCH is used to transmit MAC Control Element (CE). Here, the MAC CE is information/signal that is processed (transmitted) in a Medium Access Control (MAC) layer.

For example, a power headroom may be included in the MAC CE and may be reported via the PUSCH. In other words, a MAC CE field may be used to indicate a level of the power headroom.

The PRACH is used to transmit a random access preamble.

In the uplink radio communication, an Uplink Reference Signal (UL RS) is used as an uplink physical signal. The uplink physical signal is not used for transmission of information output from a higher layer, but is used by the physical layer. Here, the uplink reference signal includes a Demodulation Reference Signal (DMRS) and a Sounding Reference Signal (SRS).

The DMRS is associated with transmission of PUSCH or PUCCH. For example, the base station apparatus 1A uses the DMRS in order to perform channel compensation of PUSCH or PUCCH. The SRS is not associated with transmission of PUSCH or PUCCH. For example, the base station apparatus 1A uses the SRS to measure an uplink channel state.

In FIG. 1, the following downlink physical channels are used for the downlink radio communication from the base station apparatus 1A to the terminal apparatus 2A. The downlink physical channels are used to transmit information output from a higher layer.
- Physical Broadcast Channel (PBCH, broadcast channel)
- Physical Control Format Indicator Channel (PCFICH, control format indicator channel)
- Physical Hybrid automatic repeat request Indicator Channel (PHICH, HARQ indicator channel)
- Physical Downlink Control Channel (PDCCH, downlink control channel)
- Enhanced Physical Downlink Control Channel (EPDCCH, enhanced downlink control channel)
- Physical Downlink Shared Channel (PDSCH, downlink shared channel)

The PBCH is used to broadcast a Master Information Block (MIB, Broadcast Channel (BCH)) that is shared by the terminal apparatuses. The PCFICH is used to transmit information for indicating a region (e.g., the number of Orthogonal Frequency Division Multiplexing (OFDM) symbols) to be used for transmission of PDCCH.

The PHICH is used to transmit an ACK/NACK for the uplink data (transport block, codeword) received by the base station apparatus 1A. In other words, the PHICH is used to transmit a HARQ indicator (HARQ feedback) for indicating an ACK/NACK for the uplink data. Note that an ACK/NACK is also referred to as a HARQ-ACK. The terminal apparatus 2A reports the ACK/NACK having been received to a higher layer. The ACK/NACK refers to an ACK indicating a successful reception, a NACK indicating an unsuccessful reception, and a DTX indicating that no corresponding data is present. In a case that PHICH for uplink data is not present, the terminal apparatus 2A reports an ACK to a higher layer.

The PDCCH and the EPDCCH are used to transmit Downlink Control Information (DCI). Here, multiple DCI formats are defined for transmission of the downlink control information. In other words, a field for the downlink control information is defined in a DCI format and is mapped to information bits.

For example, as a DCI format for the downlink, DCI format 1A to be used for the scheduling of one PDSCH in one cell (transmission of a single downlink transport block) is defined.

For example, the DCI format for the downlink includes the downlink control information such as information of PDSCH resource allocation, information of a Modulation and Coding Scheme (MCS) for PDSCH, and a TPC command for PUCCH. Here, the DCI format for the downlink is also referred to as downlink grant (or downlink assignment).

For example, as a DCI format for the uplink, DCI format 0 to be used for the scheduling of one PUSCH in one cell (transmission of a single uplink transport block) is defined.

For example, the DCI format for the uplink includes the uplink control information such as information of PUSCH resource allocation, information of MCS for PUSCH, and a TPC command for PUSCH. The DCI format for the uplink is also referred to as uplink grant (or uplink assignment).

The DCI format for the uplink can be used to request the downlink Channel State Information (CSI, which is also referred to as reception quality information) (CSI request).

The DCI format for the uplink can be used for a configuration for indicating an uplink resource to which a CSI feedback report is mapped, the CSI feedback report being fed back to the base station apparatus by the terminal apparatus. For example, the CSI feedback report can be used for a configuration for indicating an uplink resource that periodically reports the channel state information (Periodic CSI). The CSI feedback report can be used for a mode configuration (CSI report mode) to periodically report the channel state information.

For example, the CSI feedback report can be used for a configuration for indicating an uplink resource that reports aperiodic channel state information (Aperiodic CSI). The CSI feedback report can be used for a mode configuration (CSI report mode) to aperiodically report the channel state information. The base station apparatus can configure any one of the periodic CSI feedback report and the aperiodic CSI feedback report. The base station apparatus can configure also both the periodic CSI feedback report and the aperiodic CSI feedback report.

The DCI format for the uplink can be used for a configuration for indicating a type of the CSI feedback report that is fed back to the base station apparatus by the terminal apparatus. The type of the CSI feedback report includes wideband CSI (e.g., Wideband CQI), narrowband CSI (e.g., Subband CQI), and the like.

In a case that a PDSCH resource is scheduled in accordance with the downlink assignment, the terminal apparatus receives downlink data on the scheduled PDSCH. In a case that a PUSCH resource is scheduled in accordance with the uplink grant, the terminal apparatus transmits uplink data and/or uplink control information on the scheduled PUSCH.

The PDSCH is used to transmit the downlink data (downlink transport block, DL-SCH). The PDSCH is used to transmit a system information block type 1 message. The system information block type 1 message is cell-specific information (information unique to cell).

The PDSCH is used to transmit a system information message. The system information message includes a system information block X other than the system information block type 1. The system information message is cell-specific information (information unique to cell).

The PDSCH is used to transmit an RRC message. Here, the RRC message transmitted from the base station apparatus may be shared by multiple terminal apparatuses in a cell. The RRC message transmitted from the base station apparatus 1A may be a dedicated message to a given terminal apparatus 2 (also referred to as dedicated signaling). In other words, user equipment specific information (information unique to user equipment) is transmitted by using a message dedicated to the given terminal apparatus. The PDSCH is used to transmit the MAC CE.

Here, the RRC message and/or MAC CE is also referred to as higher layer signaling.

The PDSCH can be used to request the downlink channel state information. The PDSCH can be used to transmit an uplink resource to which a CSI feedback report is mapped, the CSI feedback report being fed back to the base station apparatus by the terminal apparatus. For example, the CSI feedback report can be used for a configuration indicating an uplink resource that periodically reports the channel state information (Periodic CSI). The CSI feedback report can be used for a mode configuration (CSI report mode) to periodically report the channel state information.

The type of the downlink CSI feedback report includes wideband CSI (e.g., Wideband CSI) and narrowband CSI (e.g., Subband CSI). The wideband CSI calculates one piece of channel state information for the system band of a cell. The narrowband CSI divides the system band into prescribed units, and calculates one piece of channel state information for each division.

In the downlink radio communication, a Synchronization signal (SS) and a Downlink Reference Signal (DL RS) are used as downlink physical signals. The downlink physical signals are not used for transmission of information output from the higher layers, but are used by the physical layer.

The synchronization signal is used for the terminal apparatus to take synchronization in a frequency domain and a time domain in the downlink. The downlink reference signal is used for the terminal apparatus to perform channel compensation on a downlink physical channel. For example, the downlink reference signal is used for the terminal apparatus to calculate the downlink channel state information.

Here, the downlink reference signals include a Cell-specific Reference Signal (CRS), a UE-specific Reference Signal (URS, or a terminal apparatus-specific reference signal) associated with the PDSCH, a Demodulation Reference Signal (DMRS) associated with the EPDCCH, a Non-Zero Power Chanel State Information-Reference Signal (NZP CSI-RS), and a Zero Power Chanel State Information-Reference Signal (ZP CSI-RS).

The CRS is transmitted in an entire band of a subframe and is used to perform demodulation of PBCH/PDCCH/PHICH/PCFICH/PDSCH. The URS relating to PDSCH is transmitted in a subframe and a band that are used for transmission of PDSCH to which the URS relates, and is used to perform demodulation of PDSCH to which the URS relates.

The DMRS relating to EPDCCH is transmitted in a subframe and a band that are used for transmission of EPDCCH to which the DMRS relates. The DMRS is used to perform demodulation of EPDCCH to which the DMRS relates.

A resource for the NZP CSI-RS is configured by the base station apparatus 1A. For example, the terminal apparatus 2A performs signal measurement (channel measurement) by using the NZP CSI-RS. A resource for the ZP CSI-RS is configured by the base station apparatus 1A. With zero output, the base station apparatus 1A transmits the ZP CSI-RS. The terminal apparatus 2A performs interference measurement in a resource to which the NZP CSI-RS corresponds, for example.

A Multimedia Broadcast multicast service Single Frequency Network (MBSFN) RS is transmitted in an entire band of a subframe used for transmission of PMCH. The MBSFN RS is used to perform demodulation of PMCH. The PMCH is transmitted through the antenna port used for transmission of MBSFN RS.

Here, the downlink physical channel and the downlink physical signal are also collectively referred to as a downlink signal. The uplink physical channel and the uplink physical signal are also collectively referred to as an uplink signal. The downlink physical channel and the uplink physical channel are collectively referred to as a physical channel. The downlink physical signal and the uplink physical signal are also collectively referred to as a physical signal.

The BCH, UL-SCH, and DL-SCH are transport channels. The channels used in the MAC layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword, and coding processing or the like is performed for each codeword.

For the terminal apparatuses that supports Carrier Aggregation (CA), the base station apparatus can integrate multiple Component Carriers (CCs) for transmission in a broader band to perform communication. In the carrier aggregation, one Primary Cell (PCell) and one or more Secondary Cells (SCells) are configured as a set of serving cells.

In Dual Connectivity (DC), a Master Cell Group (MCG) and a Secondary Cell Group (SCG) are configured as a group of serving cells. The MCG includes a PCell and optionally one or more SCells. The SCG includes a primary SCell (PSCell) and optionally one or more SCells.

The base station apparatus can communicate by using a radio frame. The radio frame includes multiple subframes (sub-periods). In a case that a frame length is expressed in a time, for example, a radio frame length can be 10 milliseconds (ms), and a subframe length can be 1 ms. In this example, the radio frame includes 10 subframes.

The base station apparatus/terminal apparatus can communicate in the unlicensed band. The base station apparatus/terminal apparatus can communicate with at least one SCell operating in the unlicensed band through the carrier aggregation with the licensed band being the PCell. The base station apparatus/terminal apparatus can communicate through the dual connectivity in which the master cell group communicates in the licensed band and the secondary cell group communicates in the unlicensed band. The base station apparatus/terminal apparatus can communicate with even only the PCell in the unlicensed band. The base station apparatus/terminal apparatus can communicate through the CA or the DC even only in the unlicensed band. Note that communication in which the licensed band is PCell and the unlicensed band cells (SCell, PSCell) are assisted by, for example, the CA, the DC, or the like is also referred to as the LAA (Licensed-Assisted Access). The communication by the base station apparatus/terminal apparatus only in the unlicensed band, also referred to as an Unlicensed-standalone access (ULSA). The communication by the base station apparatus/terminal apparatus only in the licensed band is also referred to as a Licensed Access (LA).

The radio frame may have multiple frame structures. For example, frame structure type 1, frame structure type 2, and frame structure type 3 are defined. Frame structure type 1 is used for Frequency Division Duplex (FDD). In the FDD, 10 subframes are used for the downlink. In the FDD, 10 subframes are used for the uplink. The uplink and the downlink are divided into different frequency domains. Frame structure type 2 is used for Time Division Duplex (TDD). In the TDD, 10 subframes are used for the uplink and the downlink. Frame structure type 3 is used for communication in the unlicensed band. In frame structure type 3, 10 subframes in a radio frame are used for the downlink or uplink transmission. The downlink/uplink transmission may occupy one or more consecutive subframes. The downlink/uplink transmission may start transmission from any position (time, OFDM/SC-FDMA symbol, or the like) in the subframe. The downlink/uplink transmission may end transmission at any position (time, OFDM/SC-FDMA symbol, or the like) in the subframe.

In a case of communication in the unlicensed band, the base station apparatus and/or the terminal apparatus according to the present embodiment need to perform Listen Before Talk (LBT) for evaluating whether or not other communication devices are communicating, by the carrier (channel) sense prior to transmission. The base station apparatus/terminal apparatus can occupy a channel for a period of time after the LBT. The LBT includes performing the carrier sense for a fixed period of time. The LBT also includes performing the carrier sense for a random period of time. The maximum period of time while a channel can be occupied is referred to as a Maximum Channel Occupancy Time (MCOT). The MCOT varies depending on the priority of the data. The priority of the data may be expressed in a priority class (channel access priority class). The priority class is indicated by 1, 2, 3, 4 in descending order of the priority. The maximum random period of time required for the LBT may also vary depending on the priority class.

In a case of communication in the unlicensed band carrier, the base station apparatus configures an energy detection threshold such that the energy detection threshold is less than or equal to the maximum energy detection threshold. The energy detection threshold is used, in the carrier sense, to determine whether or not other communication devices are communicating (whether idle or busy). Depending on whether there is another technique that shares the carrier, the maximum energy detection threshold is different. Here, the maximum energy detection threshold in the presence of other techniques is referred to as a first threshold, and the maximum energy detection threshold in the absence of other techniques is referred to as a second threshold. The first threshold is greater than the second threshold. The second threshold changes depending on a bandwidth, a transmit power, and the like. In a case of transmitting multiple carriers through the carrier aggregation in the unlicensed band, the base station apparatus may perform the LBT on each of the multiple carriers, or on one carrier selected from the multiple carriers, and then, transmit the signal. Note that, in the case of the LBT on one carrier selected from the multiple carriers, the base station apparatus may perform the carrier sense at 25 microseconds before transmitting on the selected one carrier, and transmit the other carriers in a case that the result indicates idle.

The terminal apparatus can perform uplink transmission in the unlicensed band in accordance with the predetermined uplink channel access procedure of type 1 or type 2. In the type 1 channel access procedure, the carrier sense is performed for a random period of time, and in the type 2 channel access procedure, the carrier sense is performed for a fixed period of time. The channel access type is indicated by the base station apparatus. The maximum period of time that the terminal apparatus can occupy is referred to as an Uplink MCOT (ULMCOT). The terminal apparatus receives, at a higher layer signal, information indicating that no other technique is present from the base station apparatus. In a case of receiving the information indicating that no other technique is present and of a low priority (e.g., in a case that the priority class is 3 or 4), the ULMCOT is shorter than the MCOT.

In a case of the uplink transmission of multiple carriers (cells) through the carrier aggregation in the unlicensed band, the terminal apparatus uses channel access type 1 for one carrier randomly selected among the multiple carriers, and the channel access type 2 for the other carriers. In a case of the uplink transmission in the MCOT acquired by the base station apparatus, the base station apparatus may indicate the terminal apparatus to use channel access type 2.

Because the timing capable of transmission is varied due to the LBT, the base station apparatus/terminal apparatus can start the transmission using a part of the subframe. The base station apparatus/terminal apparatus can end the transmission using a part of the subframe. Note that a subframe a part of which is used for communication is also referred to as a partial subframe. A subframe used for starting the transmission is also referred to as a start partial subframe, or a starting partial subframe. A partial subframe used for ending the transmission is also referred to as an end partial subframe, or an ending partial subframe.

In the case of communication in the unlicensed band, the base station apparatus can allocate one or more subframes to the terminal apparatus using one piece of the downlink control information.

The base station apparatus can start the downlink transmission in units of a subframe, in units of a slot, or in units of a mini-slot. For example, the base station apparatus can transmit, to the terminal apparatus, information indicating whether to start the transmission in units of a subframe or in units of a slot, as a starting position in the subframe. The terminal apparatus monitors the control channel for each subframe in a case that the starting position in the subframe indicates the start of the transmission in units of a subframe from the base station apparatus. The terminal apparatus monitors the control channel for each slot in a case that the starting position in the subframe indicates the start of the transmission in units of a slot from the base station apparatus. The mini-slot is a unit shorter than the slot, and may be two OFDM symbols, for example. The base station apparatus can transmit, to the terminal apparatus, information indicating start of the transmission in units of a subframe, in units of a slot, or in units of a mini-slot. In a case that the transmission may be started in units of a mini-slot, the terminal apparatus monitors the control channel (control signal, control signal format) associated with a mini-slot allocation. The control channel associated with the mini-slot allocation is allocated before or after the slot.

The base station apparatus can end the downlink transmission in units of an OFDM symbol. The base station apparatus transmits a downlink subframe configuration of the unlicensed band on the downlink control information/channel that is common in a cell (also referred to as common downlink control information, downlink common control channel). The downlink subframe configuration of the unlicensed band indicates the number of OFDM symbols that the signal is occupied in the next subframe or in the current subframe. The base station apparatus masks the downlink common control channel with a Common Cell-Radio Network Temporary Identifier (CC-RNTI) and transmits the resultant channel. The C-RNTI is an identifier that the base station apparatus temporarily allocates to the terminal apparatus, and the CC-RNTI is a common identifier in the cell. The terminal apparatus decodes the downlink common control channel using the CC-RNTI. Note that the terminal apparatus decodes the downlink control channel addressed to the terminal apparatus itself using the C-RNTI.

In the case of communication in the unlicensed band, the downlink control information can be transmitted including a PUSCH starting position of the subframe. The PUSCH starting position indicates four kinds, the first symbol of the subframe (SC-FDMA symbol 0), 25 microseconds after the first symbol, 25 microseconds + timing advance after the first symbol, and the second symbol of the subframe (SC-FDMA symbol 1). Note that the timing advance is an offset for adjusting the transmission timing of the terminal apparatus. Note that in a case that the PUSCH starting position indicates 25 microseconds after the first symbol or 25 microseconds + timing advance after the first symbol, the terminal apparatus can perform transmission of a period of time between the starting position and the second symbol with a CP of the second symbol being longer. The base station apparatus can transmit the downlink control information including information indicating an PUSCH ending symbol of the subframe. The information indicating the PUSCH end symbol indicates whether or not the last SC-FDMA symbol of the subframe is to be transmitted. In other words, the information indicating the PUSCH end symbol indicates whether the signal until the last SC-FDMA symbol of the subframe is to be transmitted, or the signal until the second to last SC-FDMA symbol of the subframe is to be transmitted. For example, in a case that the base station apparatus allocates the terminal apparatus to one uplink subframe, and that the PUSCH starting position indicates other than the first symbol and the PUSCH end symbol indicates that the last SC-FDMA symbol is not transmitted, the terminal apparatus transmits the PUSCH of the subframe using from the second SC-FDMA symbol (SC-FDMA symbol 1) to the 13th SC-FDMA symbol (SC-FDMA symbol 12). In a case that the base station apparatus allocates the terminal apparatus to multiple uplink subframes, the information indicating the PUSCH end symbol indicates the end symbol information of the last subframe of the allocated consecutive subframes.

The base station apparatus transmits the downlink control information used for the scheduling of the uplink (PUSCH) in the unlicensed band. The downlink control information used for the uplink scheduling of one subframe and the downlink control information used for the uplink scheduling of the multiple subframes may be different in a downlink control information format. The downlink control information used for the uplink scheduling of one subframe includes some or all of PUSCH trigger A, timing offset, uplink resource block allocation, MCS, PUSCH starting position, PUSCH ending symbol, channel access type, and channel access priority class. The PUSCH trigger A indicates a triggered scheduling (trigger A = 0), or a non-triggered scheduling (trigger A = 1). In a case that the PUSCH trigger A indicates a non-triggered scheduling (trigger A = 0), the timing offset indicates an absolute timing offset (scheduling delay) for the PUSCH transmission. In other words, the terminal apparatus transmits the PUSCH at this timing offset. In a case that the PUSCH trigger A indicates a triggered scheduling (trigger A = 1), the timing offset indicates a relative timing offset for the PUSCH transmission, and a time window (period of time) within which the triggered scheduling of the PUSCH is valid. The channel access type indicates a carrier sense for a random period of time (type 1), or a carrier sense for a fixed period of time (type 2). The downlink control information used for the uplink scheduling of multiple subframes includes some or all of PUSCH trigger A, timing offset, resource block allocation, MCS, PUSCH starting position, PUSCH ending symbol, channel access type, channel access priority class, and the number of scheduled subframes. Note that the maximum number of scheduled subframes is transmitted from the base station apparatus to the terminal apparatus by higher layer signaling.

In the unlicensed band, the uplink resource blocks are discretely allocated in order to satisfy the power spectral density regulation in the sub-band of the system band. The uplink resource block allocation included in the downlink control information includes a start resource block and the number of allocated resource blocks. For example, the uplink resource block is allocated every 10 resource blocks. At this time, there are ten start resource blocks. Note that such an allocation at a constant interval starting from such a start resource block is also referred to as an interlace allocation (interlace structure), and one or more interlace allocations are allocated to one terminal apparatus.

In the unlicensed band, the base station apparatus may transmit the downlink control information for up to four uplink schedulings in one subframe to one terminal apparatus. The base station apparatus may transmit information indicating whether or not to request monitoring for each downlink control information format in order to reduce an amount of computation related to the monitoring of the downlink control channel of the terminal apparatus. At this time, the terminal apparatus does not monitor the downlink control information format not requested to monitor by the indication from the base station apparatus.

The base station apparatus can transmit the common downlink control information including information indicating an uplink transmission period and an uplink offset, and a PUSCH trigger B. The information indicating the uplink transmission period and the uplink offset indicates an uplink offset and an uplink period. Assuming that the uplink offset is d and the uplink period is e, in a case that the terminal apparatus detects the common downlink control information in a subframe n, the terminal apparatus may not necessarily receive the downlink physical channel/physical signal in a subframe n + d + i (i = 0, 1,..., e - 1).

The terminal apparatus transmits the PUSCH in a subframe n + d + k + i in a case that a value of the trigger A included in the downlink control information in the subframe n is 0, or in a case that a value of the trigger A included in the downlink control information closest to a subframe n - v is 1 and a value of the trigger B included in the common downlink control information of the subframe n is 1. Here, "i" represents 0 to N - 1, and N represents the number of scheduled consecutive subframes. In a case that the trigger A = 0, k is obtained by a timing offset included in the downlink control information. In a case that the trigger A = 1, k is obtained from a relative timing offset and v is obtained from a period of time within which the scheduling is valid, by the timing offset included in the downlink control information. In a case that the trigger A = 0, d = 4. In a case that the trigger A = 1, d is an uplink offset obtained from the common downlink control information. The minimum value of d + k is a capability of the terminal.

In a case that the uplink offset d and the uplink period e are obtained from the common downlink control information in the subframe n, in a case that the terminal apparatus ends the transmission in or before the subframe n + d + e - 1, the terminal apparatus can perform the uplink transmission using channel access type 2. In a case that multiple subframes are scheduled using one piece of downlink control information, and that the terminal apparatus fails the carrier sense in the subframe other than the last subframe, the terminal apparatus attempts the transmission in the next subframe.

The terminal apparatus according to the present embodiment can access the unlicensed band regardless of scheduling information provided from the base station apparatus. In other words, the terminal apparatus according to the present embodiment can transmit an uplink subframe/signal/channel autonomously using the unlicensed band.

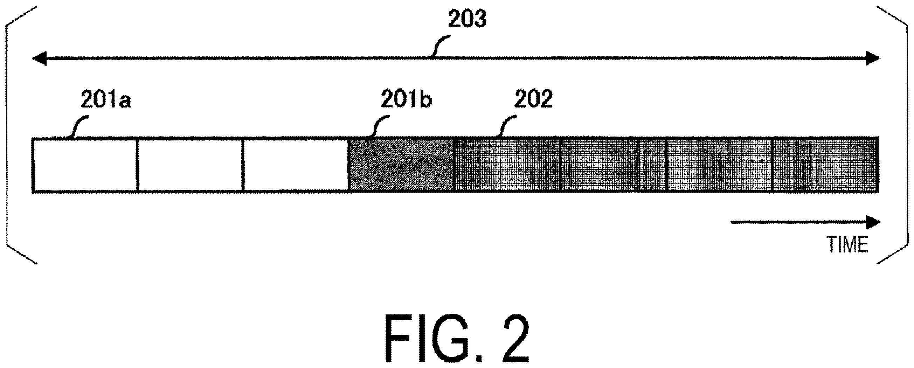

FIG. 2 is a schematic diagram illustrating an example of frame transmission in the unlicensed band for the base station apparatus and the terminal apparatus according to the present embodiment. In FIG. 2, a subframe period 201a and a subframe period 201b indicate downlink subframe periods, and a subframe period 202 indicates an uplink subframe period. A time zone 203 indicates a MCOT period secured by the base station apparatus through the LBT. Hereinafter, a description is given assuming that the subframe length is 1 ms. Thus, in FIG. 2, the MCOT period is 8 ms. Note that the description according to the present embodiment is not limited to the example illustrated in FIG. 2 for the subframe length, the MCOT period, and a ratio of the number of downlink subframes to the number of uplink subframes.

The base station apparatus can configure an uplink transmission period in the MCOT secured through the LBT. With reference to FIG. 2 as an example, the base station apparatus may configure an uplink transmission period of 4 ms. The base station apparatus according to the present embodiment can selectively or simultaneously configure a first communication mode and a second communication mode for the uplink transmission period.

Here, the first communication mode may be a communication mode in which the base station apparatus provides the scheduling information to the terminal apparatus, and the terminal apparatus determines a subframe position for transmitting the uplink subframe and a frequency position (e.g., a interlace number (allocation)) in response to the scheduling information, and transmits the uplink subframe. Hereinafter, the first communication mode is also referred to as a Scheduled Access uplink transmission, or a Scheduled Access, or a Scheduled transmission, or a grant access. In other words, the first communication mode can be said to be a communication mode in which the terminal apparatus does not transmit the uplink subframe in a case of no scheduling information being provided from the base station apparatus.

Here, the second communication mode may be a communication mode in which the terminal apparatus transmits the uplink subframe without being configured with at least a part of the subframe position for transmitting the uplink subframe and the frequency position (e.g., a interlace number (allocation)) by the base station apparatus. Hereinafter, the second communication mode is also referred to as an Autonomous Access uplink transmission, or an Autonomous Access, or an Autonomous transmission, a grant-free access, or a grant-less access. In other words, the second communication mode can be said to be a communication mode in which an amount of the scheduling information provided by the base station apparatus to the terminal apparatus is less than the first communication mode. Here, the less amount of the scheduling information can be referred to a state where an amount of information of each item included in the scheduling information is small (e.g., a state where the first communication mode is provided with four bits of information indicating the frequency position, whereas the second communication mode is provided with two bits of information indicating the frequency position), and/or a state where the number of items included in the scheduling information is small (e.g., a state where the first communication mode is provided with information indicating the subframe position and the frequency position, whereas the second communication mode is provided with information indicating only the frequency position). The second communication mode may perform the uplink transmission, based on the common downlink control information.

The base station apparatus can, in the uplink subframe period configured in the MCOT acquired by the base station apparatus itself, configure a period of the LBT performed for acquiring the MCOT to a different value according to whether or not to configure the uplink subframe period for which the second communication mode is configured, and configure the maximum value of a content window or the number of candidate values to different values.

The base station apparatus can include, in the control information included in the downlink subframe transmitted before the uplink subframe period that the uplink transmission period is configured (e.g., common control information, common DCI, and RRC signaling), information indicating whether or not the base station configures for that subframe period a scheduled transmission, or an autonomous transmission, or both (for example, Transmission type information), or a value indicating that information (for example, Transmission type indication). Note that a position of the uplink subframe period with which the common DCI is associated may be interpreted by the terminal apparatus in a fixed manner (for example, associated with the uplink subframe period, four subframe periods after the downlink subframe including the common DCI is received). The base station apparatus may notify the terminal apparatus of the common DCI including information indicating the position of the uplink subframe period with which the common DCI is associated. The base station apparatus may notify the terminal apparatus of information indicating the position of the uplink subframe period with which the common DCI is associated by the higher layer signaling. Moreover, the base station apparatus does not necessarily notify all terminal apparatuses connected to the base station apparatus of the autonomous transmission configuration information. The base station apparatus may notify only the multiple specified terminal apparatuses of the autonomous transmission configuration information. In this case, the base station apparatus can transmit DCI as a new candidate for blind decoding performed by the terminal apparatus on the PDCCH (e.g., configuring a new scrambling ID) including the autonomous transmission configuration information configured for the PDCCH.

The information indicating the transmission method configured for the uplink subframe period may indicate a transmission method configured for all uplink subframe periods in the MCOT. The information indicating the transmission method configured for the uplink subframe period may indicate a transmission method configured for each of the uplink subframe periods in the MCOT. In other words, the base station apparatus according to the present embodiment can configure the transmission method for each uplink subframe period in a case that the uplink transmission period includes multiple uplink subframe periods.

In the uplink subframe period for which the autonomous transmission is configured by the base station apparatus, the terminal apparatus can autonomously transmit the uplink subframe in the unlicensed band. For example, in a case that the terminal apparatus performs the carrier sense in the uplink subframe period and can determine that the unlicensed band is idle, the terminal apparatus can transmit an uplink subframe in the uplink subframe period. In a case that the terminal apparatus performs the carrier sense and that the terminal apparatus can determine that the unlicensed band is idle for a prescribe period of time (e.g., Defer period) the terminal apparatus can start the uplink subframe transmission. Note that the length of the prescribed period of time is not limited to any length, but the length can be configured to 25 us, for example. In the case that the terminal apparatus performs the carrier sense, and that the terminal apparatus can determine that the unlicensed band is idle for a randomly configured period of time (a random backoff period, a contention window period) in addition to a prescribed period of time, the terminal apparatus can start the uplink subframe transmission.

The terminal apparatus according to the present embodiment can continuously transmitting multiple uplink subframes in the uplink subframe period for which the autonomous transmission is configured. The base station apparatus can notify the terminal apparatus of the control information including information indicating whether or not multiple subframe transmissions more than one are allowed (or configured) in the uplink subframe period for which the autonomous transmission is configured. At this time, the base station apparatus can notify the terminal apparatus of the maximum number of uplink subframes that can be continuously transmitted. Note that the terminal apparatus can change a period of time for which the carrier sense is performed in accordance with the number of subframes continuously transmitted. For example, a period for the carrier sense performed before the terminal apparatus according to the present embodiment continuously transmits two uplink subframes can be configured to be longer than a period for the carrier sense performed before the terminal apparatus transmits one uplink subframe. In other words, the greater a time resource that the terminal apparatus is expected to occupy, the longer the period for the carrier sense is configured. Note that the configuring of the period for the carrier sense to be longer refers to that the terminal apparatus configures the prescribed period of time to be longer, the maximum value of a random number selected in a case of performing a random back-off operation or a contention window operation to be larger, and the number of candidates of the maximum value of the random number or a value included in the candidate to be larger.

In a case that the terminal apparatus transmits the uplink subframe in the uplink subframe period for which the autonomous transmission is configured, the terminal apparatus can configure an idle period (a non-transmission period, a null period) in a part of the uplink subframe. Configuring as described above allows the terminal apparatus itself or other terminal apparatus to perform the carrier sense in the idle period, and thus, the uplink subframe for which autonomous transmission is configured can be fairly used. A position of the non-transmission period may be at a beginning of the subframe, an end of the subframe, or within the subframe, or multiple positions of idle period positions may be configured. A length of the idle period may be configured to an absolute time, or in units of a transmission symbol. However, in a case that the terminal apparatuses performing the autonomous transmission configure the idle periods at positions different from each other in the uplink subframe or configure the lengths of the idle periods to values different from each other, a situation may occur in which a non-transmission section does not occurs in the unlicensed band, and a situation may occur in which other terminal apparatus cannot correctly perform the carrier sense. Thus, the terminal apparatus according to the present embodiment can configure the position of the idle period and the length of the idle period provided to the uplink subframe transmitted in the autonomous transmission to be the same position and value as other terminal apparatuses. Therefore, the base station apparatus can notify the terminal apparatus of information indicating the position of the idle period and the length of the idle period that the terminal apparatus provides to the uplink subframe in a case that the terminal apparatus performs the autonomous transmission. For example, the base station apparatus can transmit the information indicating the position of the idle period and the length of the idle period by using the common DCI or a separate DCI. By being configured as described above, the terminal apparatus according to the present embodiment can perform the carrier sense at a prescribed position in the uplink subframe period for which the autonomous transmission is configured. Note that the base station apparatus can indicate a signal/channel transmission period (occupancy period) in the common DCI or the separate DCI. In this case, the terminal apparatus can determine that a period other than the signal/channel transmission period (occupancy period) is an idle period.

Note that the terminal apparatus can use the same value of a power threshold for performing the carrier sense for a case of the autonomous transmission and for a case of the scheduled transmission. The terminal apparatus can use different values of the power threshold for performing the carrier sense between the case of the autonomous transmission and the case of the scheduled transmission. In the case of the autonomous transmission, the terminal apparatus can use a carrier sense level lower than a level in the scheduled transmission. In this case, an interference power generated by the terminal apparatus performing the autonomous transmission that cannot be controlled by the base station apparatus is reduced, so it is possible to improve the reception quality of the entire system. On the other hand, in the case of the autonomous transmission, the terminal apparatus can use the carrier sense level higher than a level in the scheduled transmission. By controlling in this manner, it is possible for the terminal apparatus to increase a likelihood that the uplink subframe can be transmitted with a lower latency.

The terminal apparatus can transmit a signal including an interlace allocation in which a spectrum is allocated at a constant interval in the case of transmitting the uplink subframe by using the autonomous transmission. Here, in a case that N candidates of the interlace location are present, the terminal apparatus can randomly select any one or more of the N interlace allocation candidates. The base station apparatus can configure for the terminal apparatus with the interlace allocation candidates selectable in the case of the transmission using the autonomous transmission. In this case, the terminal apparatus can randomly select any one or more the interlace allocation candidates configured by the base station apparatus. Note that the base station apparatus can notify the terminal apparatus of information indicating whether or not the terminal apparatus is allowed (or configured) to select multiple interlace allocation candidates, or the maximum number of interlace allocations selectable by the terminal apparatus. The terminal apparatus can configure whether or not the terminal apparatus selects multiple interlace allocation candidates based on the information. Note that, in a case that the terminal apparatus selects multiple interlace allocation candidates, the period for the carrier sense can be configured to be longer than a period in a case of selecting one of the interlace allocation candidates. In other words, the greater a frequency resource that the terminal apparatus is expected to occupy, the longer the period for the carrier sense is configured.

Note that the terminal apparatus according to the present embodiment can perform the random back-off process that randomizes a transmission start timing in order to avoid colliding with other terminal apparatuses in a case of performing the autonomous transmission. The terminal apparatus according to the present embodiment may perform the random back-off operation in the time domain, or the frequency domain, or the both domains. In a case that the terminal apparatus performs the random back-off operation in the time domain, the terminal apparatus performs the carrier sense only during a period of time (for example, CW) which is calculated from a prescribed period of time and a random number acquired by the terminal apparatus, tracing back from a frame boundary time at which the terminal apparatus is expected to start transmission of the uplink subframe, and in a case that the terminal apparatus can determine that the unlicensed band is idle during that period of time, the terminal apparatus can start the uplink subframe transmission.

In a case that a random back-off operation is performed in the frequency domain, the terminal apparatus can perform a random back-off operation by randomly selecting any one of the interlace allocation candidates described above. At this time, before performing the uplink subframe transmission, the terminal apparatus can perform the carrier sense for a prescribe period of time (e.g., Defer period) in the time domain, and in a case that the terminal apparatus can determine that the unlicensed band is idle during that period, the terminal apparatus can transmit the uplink subframe by using the randomly selected interlace allocation. The terminal apparatus can determine the period for the carrier sense, based on the number of configurable interlace allocation candidates. In a case that the number of the configurable interlace candidates is large, the terminal apparatus can set the period of the carrier sense longer than a period in a case that the number of interlace candidates is small. Performing the random back-off operation in the frequency domain allows the terminal apparatus to always transmit the uplink subframe at a prescribed timing, and thus, it is possible to be multiplexed with other terminal apparatuses by FDMA.

The terminal apparatus can configure the number of interlace candidates by selecting the channel access priority. Furthermore, the terminal apparatus according to the present embodiment can select the channel access priority to configure the number of subframes capable of being continuously transmitted. The terminal apparatus according to the present embodiment can be configured, for each channel access priority selected in a case of transmitting the uplink subframe in the uplink subframe period for which the autonomous transmission is configured, with at least one of the interlace candidate to be transmitted, the number of configurable interlace candidates, the number of subframes to be transmitted, the number of subframes capable of being continuously transmitted, the MCS (and the number of streams) to be configured, the number of configurable MCS candidates (and the number of streams) configurable, an RV to be transmitted, the number of selectable RV candidates, the maximum number of CAs, and the number of configured CAs.

The terminal apparatus can perform the random back-off operation in the frequency domain based on a random number and a back-off counter, similar to the random back-off operation performed in the time domain. For example, the terminal apparatus acquires the content window value CW, based on the random number acquired by the terminal apparatus itself. Each time turning to a frame start boundary of the uplink subframe for which the autonomous transmission is configured or a start boundary of the uplink transmission period including the uplink subframe for which the autonomous transmission is configured, a prescribed value can be subtracted from the CW to update the value of the CW. Then, in a case that the value of the CW is 0, the terminal apparatus can transmit the uplink subframe in the uplink subframe period for which the autonomous transmission next to the frame start boundary at which the value of the CW is 0 is configured. Note that the prescribed value subtracted from the CW can be configured from the base station apparatus, and other radio parameters (e.g., the total number of selectable interlace candidates) can be used. The terminal apparatus can select the prescribed value subtracted from the CW based on the number of subframes to be continuously transmitted and the number of interlace candidates to be simultaneously selected. At this time, in a case that the number of subframes to be continuously transmitted is plural, or the number of interlace candidates to be simultaneously selected is plural, the terminal apparatus can set the prescribed value subtracted from the CW smaller as compared with a case that the number of subframes to be transmitted is one, or the number of interlace candidates to be selected is one. In other words, in the terminal apparatus according to the present embodiment, the less the number of time and frequency resources (with radio resources) that are expected to be occupied, the more quickly the CW reaches 0, and therefore, it is possible to increase the probability of obtaining a transmission right.

The base station apparatus according to the present embodiment can simultaneously configure the autonomous transmission and the scheduled transmission in the uplink subframe period. In this case, the base station apparatus can notify the terminal apparatus that the autonomous transmission and the scheduled transmission are simultaneously configured in a prescribed uplink subframe period by using the downlink control information. Note that the base station apparatus may only notify the terminal apparatus that the autonomous transmission is configured in a prescribed uplink subframe period. The base station apparatus can allocate the radio resources for the uplink subframe period to the autonomous transmission and the scheduled transmission. For example, in a case that the terminal apparatus can transmit the interlace signal in transmitting the uplink subframe, the base station apparatus can allocate some of the interlace candidates configurable by the terminal apparatus to the scheduled transmission and allocate the rest of the interlace candidates to the autonomous transmission. In this case, the base station apparatus can notify the terminal apparatus of the downlink control information (e.g., the common DCI) including information indicating the interlace candidates allocated to the autonomous transmission. The base station apparatus can notify the terminal apparatus of information indicating the interlace number actually allocated to the prescribed terminal apparatus among the interlace candidates allocated to the scheduled transmission, by using the downlink control information (e.g., the separate DCI). By controlling in this manner, the base station apparatus can simultaneously configure the autonomous transmission and the scheduled transmission in a prescribed uplink subframe period.

In a case that the terminal apparatus reads the common DCI and recognizes that the autonomous transmission and the scheduled transmission are simultaneously configured in a prescribed uplink subframe period, the terminal apparatus can further read the separate DCI addressed to the terminal apparatus itself. In a case that the terminal apparatus has the separate DCI addressed to the terminal apparatus itself, and the separate DCI includes information indicating the radio resource allocation to the terminal apparatus itself, the terminal apparatus can transmit the uplink subframe using the radio resource specified by the base station apparatus. Note that, in a case that the terminal apparatus performs the scheduled transmission, the terminal apparatus needs to transmit in advance, to the base station apparatus, a signal including information indicating a scheduling request for requesting the radio resource allocation. In a case that the terminal apparatus performing the scheduling request on the base station apparatus does not receive the separate DCI addressed to the terminal apparatus itself, the separate DCI corresponding to the uplink subframe period in which the autonomous transmission and the scheduled transmission are simultaneously configured, the terminal apparatus does not perform the autonomous transmission in the uplink subframe period.

Note that the terminal apparatus needs to perform the carrier sense before transmission of the uplink subframe regardless of whether to perform the autonomous transmission or the scheduled transmission. At this time, in a case that the position and length of the idle period provided to the uplink subframe by the terminal apparatus are different between the case of the autonomous transmission and the case of the scheduled transmission, other terminal apparatus cannot correctly perform the carrier sense. In a case that the terminal apparatus performs the scheduled transmission, the position and length of the idle period provided to the uplink subframe by the terminal apparatus may be configured by the separate DCI or the like transmitted by the base station apparatus. In the terminal apparatus according to the present embodiment, in the case of the autonomous transmission, the position and length of the idle period provided to the uplink subframe may be configured in advance by the base station apparatus, or configured by the common DCI or the like from the base station apparatus such that the position and length of the idle period can be common to the terminal apparatuses that perform the autonomous transmission. Accordingly, the base station apparatus according to the present embodiment can configure the terminal apparatus performing the scheduled transmission by using the separate DCI and the like such that the position and length of the idle period provided to the uplink subframe by the terminal apparatus performing the scheduled transmission are common to the position and length of the idle period provided to the uplink subframe by the terminal apparatus performing the autonomous transmission. By controlling in this manner, the length and position of the idle period provided to the uplink subframe coincide even in the uplink subframe period in which the terminal apparatus performing the scheduled transmission and the terminal apparatus performing the autonomous transmission are mixed, the terminal apparatus can efficiently perform the carrier sense.

In a case of performing the random back-off operation, the terminal apparatus can obtain a value (counter, CW) that is calculated based on the random number acquired by the terminal apparatus itself. The terminal apparatus according to the present embodiment may use the CW which is common or independent between the case of the scheduled transmission and the case of the autonomous transmission. In a case that the common CW is used, the terminal apparatus acquires only one CW. Regardless of whether the terminal apparatus performs the autonomous transmission or the scheduled transmission, in a case that the unlicensed band is determined to be idle by the carrier sense, the CW is counted down, and in a case that the CW reaches 0, the terminal apparatus can transmit the uplink subframe regardless of the autonomous transmission or the scheduled transmission.

Note that the terminal apparatus according to the present embodiment may transmit the uplink subframe without performing the random back-off process in the uplink subframe period for which the autonomous transmission is configured. The terminal apparatus performs the carrier sense for a prescribed period of time, and in a case that the unlicensed band is idle, the terminal apparatus can transmit the uplink subframe in the uplink subframe period.

In a case that the independent CW is used, the terminal apparatus acquires two CWs of a CW for the scheduled transmission (first CW) and a CW for the autonomous transmission (second CW). The terminal apparatus counts down the first CW in a case of determining that the unlicensed band is idle by the carrier sense performed before performing the scheduled transmission, and the terminal apparatus counts down the second CW in a case of determining that the unlicensed band is idle by the carrier sense performed before performing the autonomous transmission. Then, in a case that the first CW reaches 0, the terminal apparatus can perform the scheduled transmission, and in a case that the second CW reaches 0, the terminal apparatus can perform the autonomous transmission. Note that the candidate of the maximum value of the random number generated in calculation of the first CW and the candidate of the maximum value of the random number generated in calculation of the second CW may be common or different values.

The terminal apparatus according to the present embodiment can performing the CA in which multiple Scells are bundled. The base station apparatus according to the present embodiment can notify the terminal apparatus of information indicating whether or not the autonomous transmission is configured for each of the multiple CCs for which the Scell is configured for the terminal apparatus. For example, in a case that the base station apparatus has transmitted a downlink subframe to be transmitted before the uplink subframe period, in the acquired MCOT through the CA in which multiple Scells are bundled, the base station apparatus can include, in the DCI transmitted in each CC, information indicating whether or not the CC is configured with the autonomous transmission in the uplink subframe period in the MCOT. The terminal apparatus configured to perform the CA in the autonomous transmission can transmit the uplink subframe through the CA in which the CCs each configured with the autonomous transmission are bundled. Note that the maximum number of CAs for the terminal apparatus to perform the CA in the autonomous transmission can be configured by the base station apparatus. The base station apparatus according to the present embodiment can notify the terminal apparatus of the above maximum number of CAs for the uplink subframe period for which the autonomous transmission is configured, or can configure in advance the number of CAs the terminal apparatus configures can be preset.

The terminal apparatus according to the present embodiment can use the MCS and the number of spatial streams fixedly in a case of transmitting the uplink subframe by using the autonomous transmission. In this case, the MCS and the number of spatial streams can be configured in advance in the base station apparatus. The base station apparatus may configure the MCS and the number of spatial streams in a case that the terminal apparatus is connected to the base station apparatus, or the base station apparatus may describe the MCS and the number of spatial streams in the common DCI indicating that the autonomous transmission is configured for a prescribed uplink subframe period.

In the case that the terminal apparatus according to the present embodiment transmits the uplink subframe by using the autonomous transmission, the base station apparatus cannot recognize in advance that the terminal apparatus transmits the uplink subframe, as a matter of course. Thus, in a case that multiple terminal apparatuses simultaneously transmit the uplink subframes by the same interlace configuration or the like, the base station apparatus may not correctly demodulate the uplink subframe, and at the worst, the base station apparatus may determine that the other system has transmitted the signal. In this case, of course, the base station apparatus cannot transmit, to the terminal apparatus, any positive acknowledgement indicating that the uplink subframe has been correctly received or any negative acknowledgement indicating that the uplink subframe cannot be correctly received. Thus, the terminal apparatus cannot determine whether to retransmit or transmit new data. Note that, of course, in a case that the base station apparatus can receive the uplink subframe in the uplink subframe period for which the autonomous transmission is configured, and obtain information indicating at least the terminal apparatus which has transmitted the uplink subframe, the base station apparatus can transmit a positive acknowledgement or a negative acknowledgement to the terminal apparatus.

Therefore, in the terminal apparatus according to the present embodiment, in a case that the terminal apparatus itself transmits the uplink subframe by using the autonomous transmission, and thereafter, the base station apparatus transmits no positive acknowledgement nor negative acknowledgement for a prescribed period of time to the terminal apparatus, the terminal apparatus can determine that the uplink subframe transmitted by itself has not been correctively received and can retransmit the uplink subframe. The prescribed period of time can be configured by the base station apparatus for the terminal apparatus. For example, in a case that a value indicating the prescribed period of time is X milliseconds (ms), and that no positive acknowledgement nor negative acknowledgement is included in the downlink subframe transmitted by the base station apparatus X ms later after the terminal apparatus transmits the uplink subframe, the terminal apparatus can determine that the uplink subframe transmitted by itself has not been correctively received. In the case that the value indicating the prescribed period of time is X ms similarly, and that no positive acknowledgement nor negative acknowledgement is included in the downlink subframe transmitted by the base station apparatus within X ms after the terminal apparatus transmits the uplink subframe, the terminal apparatus can determine that the uplink subframe transmitted by itself has not been correctively received. The unit of the value indicating the predetermined period may be an absolute time or the number of subframes, the number of slots, or the number of frames.

The base station apparatus according to the present embodiment can include information indicating whether or not a signal has been received in the uplink subframe period (reception acknowledgement), for example, as a common DCI, in the downlink subframe to be transmitted after the uplink subframe period for which the autonomous transmission is configured. Here, regardless of the type of the signal received by the base station apparatus, information indicating whether or not any signal is received in the uplink subframe period (or a radio resource allocated to the autonomous transmission in the uplink subframe period) can be included in the common DCI. By reading this common DCI, the terminal apparatus can recognize that the base station apparatus can receive any signal by the reception operation at least in the uplink subframe period. In a case that the base station apparatus can further receive the uplink subframe in the uplink subframe period, and obtain information indicating at least the terminal apparatus which has transmitted the uplink subframe, the base station apparatus can notify individually the terminal apparatus of a positive acknowledgement or a negative acknowledgement, for example, included in the separate DCI. Whether or not the base station apparatus receives the signal in the uplink subframe period can be performed by, for example, a carrier sense operation of the carrier sense unit. The base station apparatus can transmit a reception acknowledgement in a case that the carrier sense unit determines that the unlicensed band is busy in the subframe period.

In a case that the terminal apparatus receives the common DCI indicating that the signal has been received and further receives the separate DCI including the positive acknowledgement or the negative acknowledgement, the terminal apparatus can recognize that the uplink subframe transmitted by the terminal apparatus itself reaches at least the base station apparatus. In this case, in a case that the negative acknowledgement is acquired from the base station apparatus, a cause of the error is likely due to thermal noise or the like, and therefore, in a case of retransmitting, a packet configured with an RV different from the RV used for the initial transmission can be transmitted. On the other hand, in a case that the positive acknowledgement is acquired from the base station apparatus, a new packet may be transmitted.

Note that the terminal apparatus according to the present embodiment can vary the number of selectable RV candidates between the case of the autonomous transmission and the case of the scheduled transmission. For example, the number of RV candidates in the scheduled transmission is four, whereas the number of RV candidates in the autonomous transmission can be two. By configuring as described above, the base station apparatus can easily estimate the RV of the uplink subframe which the terminal apparatus is transmitting using the autonomous transmission. Of course, by setting the number of RV candidates in the autonomous transmission to 1, the base station apparatus may eliminate the process related to estimating the RV of the uplink subframe which the terminal apparatus is transmitting using autonomous transmission. The number of RV candidates can be configured by the base station apparatus for the terminal apparatus.

In a case that the terminal apparatus receives the common DCI indicating that the signal has been received, but does not receive the separate DCI including the positive acknowledgement or the negative acknowledgement, the terminal apparatus can recognize that the base station apparatus cannot recognize at least the terminal apparatus of transmission source of the uplink subframe that the terminal apparatus itself transmitted. In this case, the terminal apparatus attempts to retransmit, but the uplink subframe transmitted by the terminal apparatus itself is likely to collide with the uplink subframe transmitted by other terminal apparatus. Therefore, it is also possible to anew transmit an initial packet in the autonomous transmission, or transmit a scheduling request to the base station apparatus in order to avoid colliding with other terminal apparatuses.

In a case that the terminal apparatus does not receive the common DCI indicating that the signal has been received, the terminal apparatus can recognize that the uplink subframe transmitted in the uplink subframe period for which the autonomous transmission is configured has not physically reached the base station apparatus. In this case, the terminal apparatus can increase the transmit power in a case of retransmitting. In a case that the transmission is performed through the CA, retransmission can be performed through one CC without performing the CA. Note that, in a case that the terminal apparatus performs the autonomous transmission in the Scell, the terminal apparatus can notify, in the Pcell, the base station apparatus that the terminal apparatus performs the autonomous transmission in the Scell. In a case that the base station apparatus can recognize, based on the signal transmitted in the Pcell, that the terminal apparatus performs the autonomous transmission in the Scell, the base station apparatus can transmit a negative acknowledgement to the terminal apparatus even in a case that the base station apparatus cannot obtain information indicating at least which terminal apparatus has transmitted the uplink subframe that the terminal apparatus itself transmitted in the Scell. The base station apparatus may notify, by using the Pcell, the terminal apparatus of that the signal cannot be correctly received in the uplink subframe period for which the autonomous transmission is configured in the Scell. In a case that the terminal apparatus can recognize, based on the signal transmitted in the Pcell, that the base station apparatus cannot correctly receive the signal in the Scell, the terminal apparatus can perform the retransmission operation.

The above-described method assumes that the uplink subframe period for which the autonomous transmission is configured is an uplink subframe period configured in the MCOT acquired by the base station apparatus. The terminal apparatus according to the present embodiment can perform the autonomous transmission according to the above-described method in the uplink subframe period configured even outside the MCOT acquired by the base station apparatus.

The above-described method assumes that the terminal apparatus can autonomously transmit the uplink subframe in the unlicensed band in a case that the CA is configured with the licensed band. In the base station apparatus and the terminal apparatus according to the present embodiment, even in a case that the CA is not configured with the licensed band (i.e., in a case that data communication is performed with the base station apparatus only in the unlicensed band), the terminal apparatus can perform the autonomous transmission, and the base station apparatus can configure the communication mode described above.

Note that the base station apparatus may configure such that a subcarrier interval configured in the uplink subframe varies between a case that the autonomous transmission is configured and a case that the scheduled transmission is configured (i.e., in a case that the autonomous transmission is not configured). For example, the base station apparatus can configure 60 kHz as the subcarrier interval in the case of configuring the scheduled transmission, and can configure 15 kHz as the subcarrier interval in the case of configuring the autonomous transmission. The base station apparatus can notify the terminal apparatus of information indicating the communication mode and the subcarrier interval configured in the uplink subframe which are tied in with each other.

The terminal apparatus can notify the base station apparatus, by using terminal capability information, terminal category information, and the like, that the terminal apparatus can participate in the autonomous transmission.

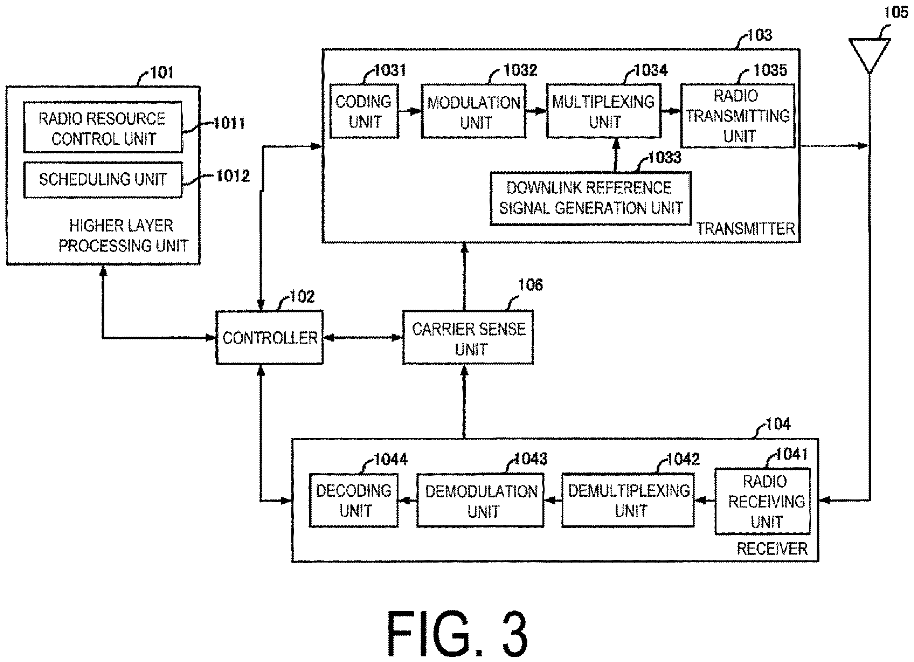

FIG. 3 is a schematic block diagram illustrating a configuration of the base station apparatus 1A according to the present embodiment. As illustrated in FIG. 3, the base station apparatus 1A includes a higher layer processing unit (higher layer processing step) 101, a controller (controlling step) 102, a transmitter (transmitting step) 103, a receiver (receiving step) 104, a transmit and receive antenna 105, and a carrier sense unit (carrier sensing step) 106. The higher layer processing unit 101 includes a radio resource control unit (radio resource controlling step) 1011 and a scheduling unit (scheduling step) 1012. The transmitter 103 includes a coding unit (coding step) 1031, a modulation unit (modulating step) 1032, a downlink reference signal generation unit (downlink reference signal generating step) 1033, a multiplexing unit (multiplexing step) 1034, and a radio transmitting unit (radio transmitting step) 1035. The receiver 104 includes a radio receiving unit (radio receiving step) 1041, a demultiplexing unit (demultiplexing step) 1042, a demodulation unit (demodulating step) 1043, and a decoding unit (decoding step) 1044.

The higher layer processing unit 101 performs processing of the Medium Access Control (MAC) layer, a Packet Data Convergence Protocol (PDCP) layer, a Radio Link Control (RLC) layer, and a Radio Resource Control (RRC) layer. The higher layer processing unit 101 generates information necessary for control of the transmitter 103 and the receiver 104, and outputs the generated information to the controller 102.

The higher layer processing unit 101 receives information of a terminal apparatus, such as a capability of the terminal apparatus (UE capability), from the terminal apparatus. To rephrase, the terminal apparatus transmits its function to the base station apparatus by higher layer signaling.

Note that in the following description, information of a terminal apparatus includes information for indicating whether the terminal apparatus supports a prescribed function, or information for indicating that the terminal apparatus has completed the introduction and test of a prescribed function. In the following description, information of whether the prescribed function is supported includes information of whether the introduction and test of the prescribed function have been completed.

For example, in a case that a terminal apparatus supports a prescribed function, the terminal apparatus transmits information (parameters) for indicating whether the prescribed function is supported. In a case that a terminal apparatus does not support a prescribed function, the terminal apparatus does not transmit information (parameters) for indicating whether the prescribed function is supported. In other words, whether the prescribed function is supported is reported by whether information (parameters) for indicating whether the prescribed function is supported is transmitted. The information (parameters) for indicating whether a prescribed function is supported may be reported by using one bit of 1 or 0.

The radio resource control unit 1011 generates or acquires from a higher node, the downlink data (the transport block) allocated in the downlink PDSCH, system information, the RRC message, the MAC CE, and the like. The radio resource control unit 1011 outputs the downlink data to the transmitter 103, and outputs other information to the controller 102. The radio resource control unit 1011 manages various configuration information of the terminal apparatuses.

The scheduling unit 1012 determines a frequency and sub frame to which the physical channels (PDSCH and PUSCH) are allocated, the coding rate and modulation scheme (or MCS) for the physical channels (PDSCH and PUSCH), the transmit power, and the like. The scheduling unit 1012 outputs the determined information to the controller 102.

The scheduling unit 1012 generates information to be used for scheduling the physical channels (PDSCH and PUSCH), based on a result of the scheduling. The scheduling unit 1012 outputs the generated information to the controller 102.

Based on the information input from the higher layer processing unit 101, the controller 102 generates a control signal for controlling the transmitter 103 and the receiver 104. The controller 102 generates the downlink control information based on the information input from the higher layer processing unit 101, and outputs the generated information to the transmitter 103. In a case that the controller 102 communicates in the unlicensed band, the controller 102 controls the carrier sense unit 106 to perform carrier sense, based on the information input from the higher layer processing unit 101, and ensures a channel occupancy time. The controller 102, after succeeding in the carrier sense, controls the transmitter 103 to transmit a resource securing signal, a transmission signal, and the like.

The transmitter 103 generates the downlink reference signal in accordance with the control signal input from the controller 102, codes and modulates the HARQ indicator, the downlink control information, and the downlink data that are input from the higher layer processing unit 101, multiplexes the PHICH, PDCCH, EPDCCH, PDSCH, and the downlink reference signal, and transmits the signal obtained through the multiplexing to the terminal apparatus 2 through the transmit and receive antenna 105.

The coding unit 1031 codes the HARQ indicator, the downlink control information, and the downlink data that are input from the higher layer processing unit 101, in compliance with a predetermined coding scheme, such as block coding, convolutional coding, and turbo coding, or in compliance with a coding scheme determined by the radio resource control unit 1011. The modulation unit 1032 modulates the coded bits input from the coding unit 1031, in compliance with a predetermined modulation scheme, such as Binary Phase Shift Keying (BPSK), quadrature Phase Shift Keying (QPSK), quadrature amplitude modulation (16QAM), 64QAM, and 256QAM, or in compliance with a modulation scheme determined by the radio resource control unit 1011.

The downlink reference signal generation unit 1033 generates, as the downlink reference signal, a sequence, known to the terminal apparatus 2A, that is determined in accordance with a rule predetermined based on the physical cell identity (PCI, cell ID) for identifying the base station apparatus 1A, and the like.

The multiplexing unit 1034 multiplexes the modulated modulation symbol of each channel, the generated downlink reference signal, and the downlink control information. To be more specific, the multiplexing unit 1034 maps the modulated modulation symbol of each channel, the generated downlink reference signal, and the downlink control information to the resource elements.

The radio transmitting unit 1035 performs Inverse Fast Fourier Transform (IFFT) on the modulation symbol and the like resulting from the multiplexing to generate an OFDM symbol, adds a cyclic prefix (CP) to the generated OFDM symbol to generate a baseband digital signal, converts the baseband digital signal into an analog signal, removes unnecessary frequency components through filtering, up-converts a result of the removal into a signal of a carrier frequency, performs power amplification, and outputs a final result to the transmit and receive antenna 105 for transmission.

In accordance with the control signal input from the controller 102, the receiver 104 demultiplexes, demodulates, and decodes the reception signal received from the terminal apparatus 2A through the transmit and receive antenna 105, and outputs information resulting from the decoding to the higher layer processing unit 101.

The radio receiving unit 1041 converts, by down-converting, an uplink signal received through the transmit and receive antenna 105 into a baseband signal, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio receiving unit 1041 removes a portion corresponding to the CP from the digital signal resulting from the conversion. The radio receiving unit 1041 performs Fast Fourier Transform (FFT) on the signal from which the CP has been removed, extracts a signal in the frequency domain, and outputs the resulting signal to the demultiplexing unit 1042.

The demultiplexing unit 1042 demultiplexes the signal input from the radio receiving unit 1041 into signals such as the PUCCH, PUSCH, and uplink reference signal. The demultiplexing is performed based on radio resource allocation information, included in the uplink grant notified to each of the terminal apparatuses 2, that is predetermined by the base station apparatus 1A by using the radio resource control unit 1011.

The demultiplexing unit 1042 performs channel compensation for the PUCCH and the PUSCH. The demultiplexing unit 1042 demultiplexes the uplink reference signal.

The demodulation unit 1043 performs Inverse Discrete Fourier Transform (IDFT) on the PUSCH, acquires modulation symbols, and performs reception signal demodulation on each of the modulation symbols of the PUCCH and PUSCH, in compliance with a predetermined modulation scheme, such as BPSK, QPSK, 16QAM, 64QAM, and 256QAM, or in compliance with a modulation scheme that is notified by the base station apparatus 1A to each of the terminal apparatuses 2 in advance with the uplink grant.

The decoding unit 1044 decodes the coded bits of the PUCCH and PUSCH that have been demodulated in compliance with a predetermined coding scheme at a coding rate that is predetermined or that is notified by the base station apparatus 1A to each of the terminal apparatuses 2 in advance with the uplink grant, and outputs the decoded uplink data and uplink control information to the higher layer processing unit 101. In a case that PUSCH is retransmitted, the decoding unit 1044 performs the decoding by using the coded bits that is input from the higher layer processing unit 101 and retained in an HARQ buffer, and the demodulated coded bits.

The carrier sense unit 106 performs the carrier sense in accordance with the channel priority class or the channel access type to ensure the channel occupancy time.

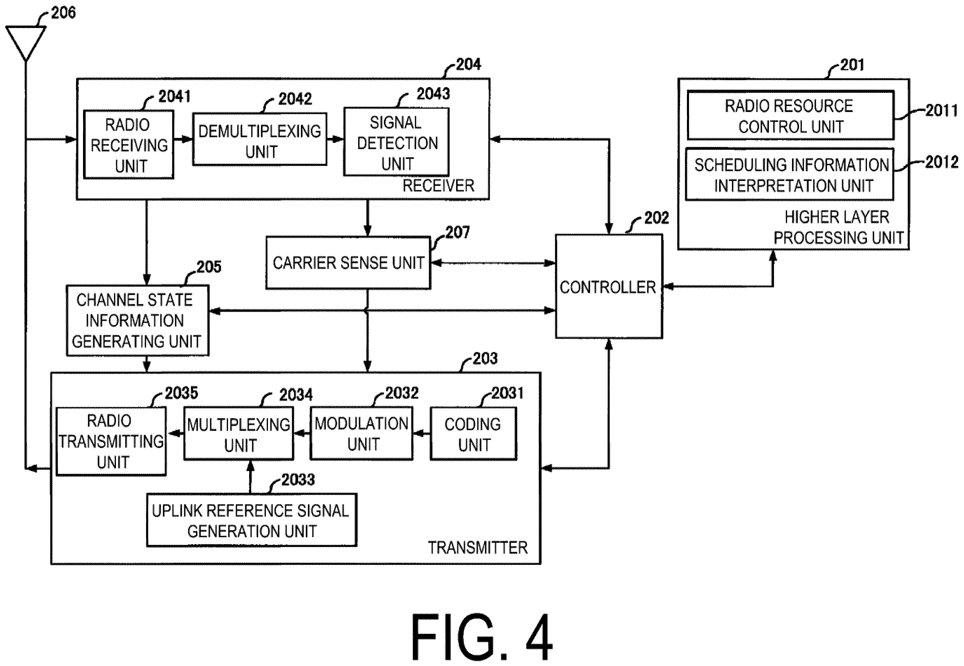

FIG. 4 is a schematic block diagram illustrating a configuration of the terminal apparatus 2 according to the present embodiment. As illustrated in FIG. 4, the terminal apparatus 2A includes a higher layer processing unit (higher layer processing step) 201, a controller (controlling step) 202, a transmitter (transmitting step) 203, a receiver (receiving step) 204, a channel state information generation unit (channel state information generating step) 205, a transmit and receive antenna 206, and a carrier sense unit (carrier sensing step) 207. The higher layer processing unit 201 includes a radio resource control unit (radio resource controlling stop) 2011 and a scheduling information interpretation unit (scheduling information interpreting step) 2012. The transmitter 203 includes a coding unit (coding step) 2031, a modulation unit (modulating step) 2032, an uplink reference signal generation unit (uplink reference signal generating step) 2033, a multiplexing unit (multiplexing step) 2034, and a radio transmitting unit (radio transmitting step) 2035. The receiver 204 includes a radio receiving unit (radio receiving step) 2041, a demultiplexing unit (demultiplexing step) 2042, and a signal detection unit (signal detecting step) 2043.

The higher layer processing unit 201 outputs, to the transmitter 203, the uplink data (the transport block) generated by a user operation or the like. The higher layer processing unit 201 performs processing of the Medium Access Control (MAC) layer, the Packet Data Convergence Protocol (PDCP) layer, the Radio Link Control (RLC) layer, and the Radio Resource Control (RRC) layer.

The higher layer processing unit 201 outputs, to the transmitter 203, information for indicating a terminal apparatus function supported by the terminal apparatus itself.

The radio resource control unit 2011 manages various configuration information of the terminal apparatuses itself. The radio resource control unit 2011 generates information to be mapped to each uplink channel, and outputs the generated information to the transmitter 203.

The radio resource control unit 2011 acquires configuration information of CSI feedback transmitted from the base station apparatus, and outputs the acquired information to the controller 202.

The radio resource control unit 2011 acquires information for the carrier sense in the unlicensed band transmitted from the base station apparatus, and outputs the acquired information to the controller 202.

The scheduling information interpretation unit 2012 interprets the downlink control information received through the receiver 204, and determines scheduling information. The scheduling information interpretation unit 2012 generates control information in order to control the receiver 204 and the transmitter 203, based on the scheduling information, and outputs the generated information to the controller 202.

The controller 202 generates, based on the information input from the higher layer processing unit 201, a control signal for controlling the receiver 204, the channel state information generation unit 205, and the transmitter 203. The controller 202 outputs the generated control signal to the receiver 204, the channel state information generation unit 205, and the transmitter 203 to control the receiver 204 and the transmitter 203.

The controller 202 controls the transmitter 203 to transmit CSI generated by the channel state information generation unit 205 to the base station apparatus.

In a case that the controller 202 communicates in the unlicensed band, the controller 202 controls the carrier sense unit 207 to ensure the channel occupancy time. The controller 202 calculates the energy detection threshold from the transmit power, bandwidth, and the like, and outputs the calculated energy detection threshold to the carrier sense unit 207.

In accordance with the control signal input from the controller 202, the receiver 204 demultiplexes, demodulates, and decodes a reception signal received from the base station apparatus 1A through the transmit and receive antenna 206, and outputs the resulting information to the higher layer processing unit 201.

The radio receiving unit 2041 converts, by down-converting, a downlink signal received through the transmit and receive antenna 206 into a baseband signal, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio receiving unit 2041 removes a portion corresponding to the CP from the digital signal resulting from the conversion, performs fast Fourier transform of the signal from which the CP has been removed, and extracts a signal in the frequency domain.

The demultiplexing unit 2042 demultiplexes the extracted signal into the PHICH, PDCCH, EPDCCH, PDSCH, and the downlink reference signal. The demultiplexing unit 2042 performs channel compensation for the PHICH, PDCCH, and EPDCCH based on a channel estimation value of a desired signal obtained from channel measurement, detects downlink control information, and outputs the detected downlink control information to the controller 202. The controller 202 outputs the PDSCH and the channel estimation value of the desired signal to the signal detection unit 2043.

The signal detection unit 2043, by using the PDSCH and the channel estimation value, detects a signal, and outputs the detected signal to the higher layer processing unit 201.

The transmitter 203 generates an uplink reference signal in accordance with the control signal input from the controller 202, codes and modulates the uplink data (the transport block) input from the higher layer processing unit 201, multiplexes the PUCCH, PUSCH, and the generated uplink reference signal, and transmits a signal resulting from the multiplexing to the base station apparatus 1A through the transmit and receive antenna 206.

The coding unit 2031 codes the uplink control information input from the higher layer processing unit 201 in compliance with a coding scheme such as convolutional coding and block coding. The coding unit 2031 performs turbo coding in accordance with information used for the scheduling of the PUSCH.

The modulation unit 2032 modulates the coded bits input from the coding unit 2031, in compliance with a modulation scheme that is notified with the downlink control information, such as BPSK, QPSK, 16QAM, and 64QAM, or in compliance with a modulation scheme that is predetermined for each channel.

The uplink reference signal generation unit 2033 generates a sequence acquired according to a predetermined rule (formula), based on a physical cell identity (PCI, also referred to as a Cell ID or the like) for identifying the base station apparatus 1A, a bandwidth to which the uplink reference signal is mapped, a cyclic shift notified with the uplink grant, a parameter value for generation of a DMRS sequence, and the like.

In accordance with the control signal input from the controller 202, the multiplexing unit 2034 rearranges modulation symbols of the PUSCH in parallel and then performs Discrete Fourier Transform (DFT) of the rearranged modulation symbols. The multiplexing unit 2034 multiplexes the PUCCH and PUSCH signals and the generated uplink reference signal for each transmit antenna port. To be more specific, the multiplexing unit 2034 maps the PUCCH and PUSCH signals and the generated uplink reference signal to the resource elements for each transmit antenna port.

The radio transmitting unit 2035 performs Inverse Fast Fourier Transform (IFFT) on a signal resulting from the multiplexing, performs the modulation of SC-FDMA scheme to generate an SC-FDMA symbol, adds CP to the generated SC-FDMA symbol to generate a baseband digital signal, converts the baseband digital signal into an analog signal, removes unnecessary frequency components, up-converts a result of the removal into a signal of a carrier frequency, performs power amplification, and outputs a final result to the transmit and receive antenna 206 for transmission.

The carrier sense unit 207 performs the carrier sense by using the channel priority class, the channel access type, the energy detection threshold, and the like to ensure the channel occupancy time.

Note that the terminal apparatus 2 can perform modulation according to not only the SC-FDMA scheme but also the OFDMA scheme.

Note that the frequency bands used by the apparatuses (base station apparatus and terminal apparatus) according to the present embodiment are not limited to the licensed bands and unlicensed bands described heretofore. The frequency band targeted by the present embodiment includes a frequency band called a white band (white space) which is not used in practice for the purpose of preventing interference between the frequencies or the like despite being licensed by a country or region to a special service (for example, a frequency band not used depending on a region despite being allocated for TV broadcast), and a shared frequency band (licensed shared band) which is expected be shared by multiple operators in the future despite having been exclusively allocated to a special operator in the past.

A program running on an apparatus according to an aspect of the present invention may serve as a program that controls a Central Processing Unit (CPU) and the like to cause a computer to operate in such a manner as to realize the functions of the embodiment according to an aspect of the present invention. Programs or the information handled by the programs are temporarily stored in a volatile memory such as a Random Access Memory (RAM), or in a non-volatile memory such as a flash memory, in a Hard Disk Drive (HDD), or other storage device systems.

Note that a program for realizing functions of the embodiment according to an aspect of the present invention may be recorded in a computer-readable recording medium. The functions may be realized by causing a computer system to read the program recorded in the recording medium for execution. The "computer system" herein refers to a computer system built into the apparatuses, and the computer system includes an operating system and hardware components such as a peripheral device. The "computer-readable recording medium" may include a semiconductor recording medium, an optical recording medium, a magnetic recording medium, a medium dynamically holding a program for a short time, or other computer-readable recording media.

The respective functional blocks or features of the apparatuses used in the above-described embodiment may be implemented or performed by an electrical circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or a known type of a processor, a controller, a micro-controller, or a state machine. The above-mentioned electric circuit may be constituted by a digital circuit, or an analog circuit. Furthermore, in a case that with advances in semiconductor technology, a circuit integration technology appears that replaces the present integrated circuits, one or more aspects of the present invention can use a new integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

### Industrial Applicability

An aspect of the present invention can be preferably used in a base station apparatus, a terminal apparatus, and a communication method. An aspect of the present invention can be utilized, for example, in a communication system, communication equipment (for example, a cellular phone apparatus, a base station apparatus, a radio LAN apparatus, or a sensor device), an integrated circuit (for example, a communication chip), or a program.

### Reference Signs List

- 1A: Base station apparatus
- 2A, 2B: Terminal apparatus
- 101: Higher layer processing unit
- 102: Controller
- 103: Transmitter
- 104: Receiver
- 105: Transmit and receive antenna
- 106: Carrier sense unit
- 1011: Radio resource control unit
- 1012: Scheduling unit
- 1031: Coding unit
- 1032: Modulation unit
- 1033: Downlink reference signal generation unit
- 1034: Multiplexing unit
- 1035: Radio transmitting unit
- 1041: Radio receiving unit
- 1042: Demultiplexing unit
- 1043: Demodulation unit
- 1044: Decoding unit
- 201: Higher layer processing unit
- 202: Controller
- 203: Transmitter
- 204: Receiver
- 205: Channel state information generation unit
- 206: Transmit and receive antenna
- 207: Carrier sense unit
- 2011: Radio resource control unit
- 2012: Scheduling information interpretation unit
- 2031: Coding unit
- 2032: Modulation unit
- 2033: Uplink reference signal generation unit
- 2034: Multiplexing unit
- 2035: Radio transmitting unit
- 2041: Radio receiving unit
- 2042: Demultiplexing unit
- 2043: Signal detection unit

## Claims

1. A base station apparatus for communicating with a terminal apparatus, the base station apparatus comprising:
a carrier sense unit configured to perform carrier sense to reserve a radio medium for a prescribed time period;
a controller configured to configure an uplink communication period in a part of the prescribed time period, and selectively or simultaneously configure a first communication mode and a second communication mode in at least one uplink subframe period in the uplink communication period; and
a transmitter configured to transmit a downlink subframe including control information for indicating a communication mode configured for the at least one uplink subframe period, wherein
the first communication mode allows the terminal apparatus to communicate based on scheduling information of the base station apparatus, and
the second communication mode allows the terminal apparatus to communicate without the scheduling information of the base station apparatus.

2. The base station apparatus according to claim 1, wherein
in the at least one uplink subframe period for which the second communication mode is configured, information for indicating a candidate of an interlace number configurable by the terminal apparatus is signaled to the terminal apparatus.

3. The base station apparatus according to claim 2, wherein
the controller configures an occupancy period of signal in the at least one uplink subframe period, and
in a case that the controller simultaneously configures the first communication mode and the second communication mode in the at least one uplink subframe period, the occupancy period is common to the first communication mode and the second communication mode.

4. The base station apparatus according to claim 2, wherein
in the at least one uplink subframe period for which the second communication mode is configured, information for indicating a maximum value of the number of uplink subframes which the terminal apparatus can continuously transmit is signaled to the terminal apparatus.

5. The base station apparatus according to claim 2, wherein
the controller is capable of configuring multiple component carriers in the at least one uplink subframe period, and selectively or simultaneously configure the first communication mode and the second communication mode for each of the multiple component carriers.

6. The base station apparatus according to claim 5, wherein
in the at least one uplink subframe period for which the second communication mode is configured, information for indicating the maximum number of the multiple component carriers which the terminal apparatus is capable of simultaneously configuring is signaled to the terminal apparatus.

7. The base station apparatus according to claim 2, wherein
in a case that an uplink subframe is received from the terminal apparatus in the at least one uplink subframe period for which the second communication mode is configured, the transmitter transmits, to the terminal apparatus, a positive acknowledgement or a negative acknowledgement of the uplink subframe in a specified downlink subframe after a prescribed time period elapses from a timing when the uplink subframe is received.

8. The base station apparatus according to claim 7, wherein
information for indicating the prescribed time period is signaled to the terminal apparatus.

9. The base station apparatus according to claim 2, wherein
the transmitter transmits, to the terminal apparatus, a reception acknowledgement for indicating that a signal has been received in the at least one uplink subframe period for which the second communication mode is configured.

10. A terminal apparatus for communicating with a base station apparatus, the terminal apparatus comprising:
a carrier sense unit configured to perform carrier sense to reserve a radio medium for a prescribed time period;
a transmitter configured to transmit an uplink subframe in a case that an uplink subframe period , for which a first communication mode and a second communication mode is selectively or simultaneously configured by the base station apparatus, is reserved by using the carrier sense; and
a receiver configured to receive a downlink subframe including control information for indicating a communication mode configured for the uplink subframe period, wherein,
the first communication mode allows communication based on scheduling information notified from the base station apparatus, and
the second communication mode allows communication without the scheduling information notified from the base station apparatus.

11. The terminal apparatus according to claim 10, wherein
in a case that the transmitter transmits the uplink subframe in the uplink subframe period for which the second communication mode is configured, the transmitter uses an interlace candidate which the base station apparatus configures in the second communication mode.

12. The terminal apparatus according to claim 11, wherein
the transmitter continuously transmits a plurality of the uplink subframes, and a period for the carrier sense performed by the carrier sense unit is configured based on the number of the plurality of the uplink subframes.

13. The terminal apparatus according to claim 11, wherein
in a case that the transmitter transmits a scheduling request to the base station apparatus, the transmitter does not transmit the uplink subframe, based on the second communication mode, in the uplink subframe period for which the first communication mode and the second communication mode are simultaneously configured.

14. The terminal apparatus according to claim 11, wherein
in the uplink subframe period for which the second communication mode is configured, in a case that neither positive acknowledgement nor negative acknowledgement related to the uplink subframe is transmitted from the base station apparatus for a prescribed time period after the uplink subframe is transmitted, the uplink subframe is retransmitted.

15. A communication method for a base station apparatus for communicating with a terminal apparatus, the communication method comprising the steps of:
performing carrier sense to reserve a radio medium for a prescribed time period;
configuring an uplink communication period in a part of the prescribed time period, and selectively or simultaneously configuring a first communication mode and a second communication mode in at least one uplink subframe period in the uplink communication period; and
transmitting a downlink subframe including common control information for indicating a communication mode configured for the uplink subframe period, wherein
the first communication mode allows the terminal apparatus to communicate based on scheduling information of the base station apparatus, and
the second communication mode allows the terminal apparatus to communicate without the scheduling information of the base station apparatus.

16. A communication method for a terminal apparatus for communicating with a base station apparatus, the communication method comprising the steps of:
performing carrier sense to reserve a radio medium for a prescribed time period;
transmitting an uplink subframe in a case that an uplink subframe period, for which a first communication mode and a second communication mode is selectively or simultaneously configured by the base station apparatus, is reserved by using the carrier sense; and
receiving a downlink subframe including common control information for indicating a communication mode configured for the uplink subframe period, wherein
the first communication mode allows communication based on scheduling information notified from the base station apparatus, and
the second communication mode allows communication without the scheduling information notified from the base station apparatus.
